# EUROPEAN PATENT APPLICATION

(11) **EP 2 511 134 A1**
(43) Date of publication of application: **17.10.2012**
(21) Application number: 11162253.6
(22) Date of filing: 13.04.2011
(51) Int. Cl.: B60Q 1/04, B60Q 1/26, G02B 6/00, F21S 8/10, B62D 35/00

(54) **Vehicle Light Unit**

(71) Applicant: Volvo Car Corporation, 40 531 Göteborg (SE)
(72) Inventor: Disley, Jonathan, 44244, Kungälv (SE); Nilsson, Andreas, 44242, Kungälv (SE)

(57) **Abstract**

The invention relates to a light unit (22,32,42,52) on an automotive vehicle, which light unit makes up an assembly adapted for attachment to the vehicle. The light unit comprises a translucent body (33,43,53) attached to the assembly, said translucent body having a outer surface defining a light emitting area, an inner surface facing the vehicle, and side surfaces connecting the outer and inner surfaces. At least one mounting section is provided for a light source (51) arranged to transmit light into said translucent body, and attachment means for attaching a support or housing to a side surface or a rear surface of said translucent body. The translucent body (33,43,53) forms a wave guide arranged to direct and disperse light from at least one light source (51) through said translucent body so as to provide illumination through the light emitting area; and which body comprises a shock absorbing elastic material.

## Description

### FIELD OF THE INVENTION

This invention relates to vehicle lights and more particularly to vehicle light assemblies which are capable of elastic deformation upon impact with an object. The invention is further related to vehicle lights arranged to assist streamlining of the vehicle body whereby aerodynamic drag is reduced.

### PRIOR ART

As vehicles become increasingly aerodynamically designed, there is a desire to provide indicator and rear light assemblies which are integrated into the bodywork and bumpers of the vehicle to provide sleek, smooth, aerodynamic styling. When, however, the light assembly is substantially flush with either of the vehicle's bumpers, an impact with a foreign object or by another bumper could cause destruction of the lamp assembly. Current light assemblies typically employ a functional bulb reflector which, in turn, is surrounded by what is referred to as a "bright" frame or housing, which is a rigid high heat resistant material, such as nylon or polycarbonate vacuum metallised with aluminium to create a lamp assembly with an overall shiny or bright appearance. The housing is provided with a transparent protective cover, having one or more colours dependent on the function of the light. Such lamp assemblies will, however, be destroyed if placed flush with a vehicle bumper, when subjected to an impact force.

A bumper is a protective device made of steel, aluminium, rubber, or plastic that is mounted on the front and rear of a passenger car. When a low speed collision occurs, the bumper system absorbs the shock to prevent or reduce damage to the car. Some bumpers use energy absorbers or brackets and others are made with a foam cushioning material.

The car bumper is mainly designed to prevent or reduce physical damage to the front and rear ends of passenger motor vehicles in low-speed collisions. Automobile bumpers are typically not designed to be structural components that would significantly contribute to vehicle crashworthiness or occupant protection during front or rear collisions. It is as a rule not a safety feature intended to prevent or mitigate injury severity to occupants in the passenger cars. Bumpers are designed to protect the hood, trunk, grille, fuel, exhaust and cooling system as well as safety related equipment such as parking lights, headlamps and taillights in low speed collisions.

In order to ensure that vehicle bumpers meet a predetermined standard, many countries have introduced legislation or guidelines. For instance, in the United States the National Highway Traffic Safety Administration (NHTSA) has introduced Federal regulations 49 CFR Part 581, "The bumper standard". This standard prescribes performance requirements for passenger cars in low-speed front and rear collisions. It applies to front and rear bumpers on passenger cars to prevent the damage to the car body and safety related equipment at barrier impact speeds of 2,5 mph for longitudinal front and rear barrier and pendulum impacts and 1.5 mph for corner pendulum impacts.

This is equivalent to a 5 mph crash into a parked vehicle of the same weight. The standard requires protection in the region 16 to 20 inches above the road surface and the manufacturer can provide the protection by any means it wants. For example, some vehicles do not have a solid bumper across the vehicle, but meet the standard by strategically placed bumper guards and corner guards.

The Federal bumper standard does not apply to vehicles other than passenger cars (i.e., sport utility vehicles (SUVs), minivans, or pickups trucks). The agency has chosen not to regulate bumper performance or elevation for these vehicle classes because of the potential compromise to the vehicle utility in operating on loading ramps and off road situations.

The regulations introduced by NTHSA refer to a two-phased rulemaking action on bumper requirements, that is, Phase I and II. Phase I of the standard became effective on September 1, 1978 and added new performance criteria which prohibited damage to all exterior vehicle surfaces. The standard requires that there be no damage to safety-related parts and exterior surfaces not involving the bumper system (e.g., sheet metal; lamps; and fuel, exhaust and cooling systems) with damage to the face bar and its fasteners at impact test speed of 5 mph front and rear impacts with barrier and pendulum; 3 mph corner impact with pendulum. More stringent damage resistance criteria known as Phase II became effective one year later, on September 1 1979 and consisted of 5 mph longitudinal front and rear impacts with barrier and pendulum; 3 mph corner impact pendulum, all with no damage to the bumper itself beyond a 3/8 inch dent and 3/4 inch set or displacement from original position.

The regulations were revised in 1987, where NTHSA concluded that reducing the impact speed from 5 mph to 2,5 front and rear impact speed best satisfied the statutory criteria that the bumper standard "seek to obtain maximum feasible reduction in costs to the public and to the consumer". At the same time the corner impact speed was lowered from 3 mph to 1,5 mph. The agency also concluded that reducing the impact speed to 2,5 mph and eliminating the Phase II damage criteria would not have an adverse effect on safety as measured by the number of crashes, deaths or injuries that occur annually. The NTHSA set the protection standard at 2,5 mph after studying the comparable repair costs of a 5 mph bumper that has higher energy absorption capacity along with additional cost and weight.

Under the Canadian bumper standard, the vehicle is impacted into a fixed-collision barrier that is perpendicular to its line of travel while the vehicle is travelling longitudinally forward at 8 km/h (5 mph) and longitudinally backward at 8 km/h (5 mph), with its engine operating at idle speed. Every vehicle is impacted twice on the front and rear surfaces and once on each front and rear corner with the impact line at any height between 500mm (20 inches) and 400mm (16 inches). While the impact speed in the Canadian standard is higher than that in the U.S. standard, the Canadian standard has less stringent protective criteria. Specifically, the protective criteria for the Canadian standard require that the vehicle does not touch the test device, except on the impact ridge with a force that exceeds 2000 lbs. on the combined surface of the test device.

The United Nations Economic Commission for Europe (ECE) regulation No. 42 requires that a car's safety systems continue to operate normally after the car has been impacted by a pendulum or moving barrier on the front or rear longitudinally at 4 kilometres per hour (about 2.5 mph) and on the front and rear corner at 2.5 kilometres per hour (about 1.5 mph) at 455 mm (about 18 inches) above the ground under loaded and unloaded conditions.

A problem for car manufacturers is therefore that it may be necessary to provide the same models with different bumpers for different markets. The invention aims to solve the problem of to preventing damage to certain safety related equipment, in particular rear lamps and indicators, without requiring a redesign of the bumper in order to meet national test requirements.

A further problem relates to aerodynamic design and streamlining of the vehicle body whereby it is desired to reduce aerodynamic drag. By reducing drag, in particular for rear lights, it is possible to reduce fuel/energy consumption and minimise soiling of the rear portion of the vehicle. However, an advantageous aerodynamic design often conflicts with regulations prescribing performance requirements for passenger cars in low-speed front and rear collisions.

The object of the invention is therefore to provide a light unit suitable for rear lights, sidelights and/or indicators of a vehicle, which light unit avoids the above problems and disadvantages.

### THE INVENTION

The object of the invention is achieved by means of a rear light unit as specified in the attached claims.

According to a preferred embodiment the invention relates to a light unit on an automotive vehicle, which light unit makes up an assembly adapted for attachment to the vehicle. The light unit comprises a translucent body attached to the assembly, said translucent body having an outer surface defining a light emitting area, an inner surface facing the vehicle, and side surfaces connecting the outer and inner surfaces. The assembly further comprises at least one mounting section for a light source arranged to transmit light into said translucent body. Attachment means is provided for attaching a support or housing to a side surface or a rear surface of said translucent body. The translucent body forms a wave guide arranged to direct light from at least one light source through said translucent body so as to provide illumination through the light emitting area. The translucent body comprises a shock absorbing elastic material. In this context, the term "light emitting area" is defined as a visible outer surface located in the vehicle body, which surface can be seen by other motorists.

The light unit has an illumination mode in which at least a first light source provides illumination of a first intensity in a first wavelength range through the light emitting area. The light unit also has a brake mode in which at least the first light source provides illumination of a second intensity in the first wavelength range through the light emitting area. These modes can be provided by making each light source vary in intensity, either by varying the intensity of each light emitting unit in said light source or by actuating different numbers of light emitting units in said light source. Alternatively, multiple light sources in different locations on the translucent body can be used. Said multiple light sources can be varied in intensity as described above, or by switching on different numbers of light sources in each mode.

The assembly can comprise a second light source attached to a side surface or a rear surface of said translucent body, in a location remote from the first light source. The second light source can be configured to provide illumination through at least a predetermined portion of the light emitting area, different from the area illuminated by the first light source, or for varying the intensity of the emitted light as indicated above.

The at least one light source can located on the vehicle at a location outside the assembly. In this case, light can be transmitted through an optical fibre from at least one light source comprising at least one diode laser. The optical fibre is arranged to be attached to the mounting section to provide a light source arranged to transmit light into said translucent body.

Alternatively, the at least one light source can comprise at least one light emitting diode (LED). In this case the at least one light source comprises single or multiple light emitting diodes (LEDs) mounted in or adjacent a side surface or the rear surface of said translucent body. When multiple light emitting diodes are used, these are preferably mounted together in a unit comprising one line or parallel lines of diodes.

In order to transmit and disperse light within the translucent body, the body has a predetermined light transmittance. The transmittance is the fraction of incident light at a specified wavelength that passes through a sample of a predetermined thickness. The translucent property of a particular material used in the translucent body gives it a "frosted" appearance and determines the maximum thickness and/or the number of light sources required to achieve a desired emission of light through the outer surface of said body. The amount of light transmitted into the translucent body should be sufficient to make said body appear to glow or light up from the inside. This effect can be enhanced by the presence of a trace amount of a suitable activator species to make the material luminescent. The emission of light through the outer surface of said body is adapted to fulfil any legal requirement relating to light emission in said normal mode and brake mode.

In order to provide shock absorbing properties, the translucent body comprises an elastic material with a Shore A hardness of 50-90. The translucent body can be made of a suitable elastic material such as a latex rubber compound or a styrene-butadiene-rubber. Such materials have a light transmittance of 50 % or more. A preferable temperature range of use for these materials is approximately -40 °C to 100 °C (-40 F to 212 °F). The invention is not limited to the above materials as any suitable material with the desired elastic and translucent properties can be used. The motor vehicle rear end has an air separation edge extending along at least a portion of the rear light unit in at least the transverse direction of the vehicle. Alternatively, the air separation edge extends along the rear light unit in said transverse direction and at least partially around the adjacent corner of the vehicle body. These examples are best suited for sedan, coupé or convertible/cabriolet type vehicles, where the rear light units are located adjacent the upper rear edge and/or corner of the luggage compartment. The air separation edge is formed by an edge transition region of the rear light unit, following the upper circumferential contour of said rear light unit. Said air separation edge is located between an upper portion of the rear light unit; said portion substantially conforming to the shape of the vehicle body adjacent said light unit, and a downward angled rear portion of the rear light unit. The angle between the upper portion of the rear light unit and the downward angled rear portion of the rear light unit can be selected between 90° and 160°. This angle α can be constant or be varied along the transverse extension of the air separation edge.

According to one example, a plane parallel to the upper surface of the light unit in a point located adjacent the air separation edge is angled between 3° and 10° relative to a plane parallel to the upper surface of the vehicle body located upstream of said point, adjacent the location where the vehicle body meets, or transitions into, the rear light unit. This angle is denoted β. If the upper surface of the light unit has a curvature, the main plane of said surface can be used. The longitudinal extension of the upper surface of the light unit, i.e. the distance from the point of transition between the body and the light unit up to the air separation edge, is selected sufficient to achieve air separation between the upper and rear surfaces of the light unit. This distance is dependent on the relative shape of the vehicle body adjacent the light unit. The said distance and angle can be determined by performing a computer based simulation, or by empirical testing in a wind tunnel.

In the case of estates, hatchbacks or sport utility vehicles (SUV) the rear light units are often located adjacent the rear corner of the luggage compartment. For such vehicles the air separation edge extends around the adjacent corner of the vehicle and at least partially along the rear light unit in said transverse direction and body. In this example, a plane parallel to a side surface of the light unit in a point located adjacent the air separation edge is arranged at an angle β between 3° and 10° relative to a plane parallel to the side surface of the vehicle body located upstream of said point adjacent the location where the vehicle body transitions into the rear light unit. If the side surface of the light unit has a curvature, the main plane of said surface can be used. The longitudinal extension of the side surface of the light unit, i.e. the distance from the point of transition between the body and the light unit up to the air separation edge, is selected sufficient to achieve air separation between the side and rear surfaces of the light unit.

In this example, the term "upstream" is defined relative to the direction in which air is flowing over each point of the vehicle body when the vehicle is travelling in its forward longitudinal direction. An air separation edge is an automotive aerodynamic device, the function of which is to disrupt existing airflow patterns and to 'spoil' unfavourable air movement across a body of a vehicle in motion. Many vehicles have a fairly steep downward angle going from the rear edge of the roof down to the rear of the car. At high speeds, air flowing across the roof tumbles over this edge, causing air flow separation. The flow of air becomes turbulent and a low-pressure zone is created, increasing drag and instability. Adding a rear spoiler or an air separation edge makes the air follow a longer, gentler slope from the roof to the spoiler or air separation edge, which helps to delay flow separation. This decreases drag (c_{w}-coefficient), increases fuel economy, and helps keep the rear of the vehicle free from dirt.

As stated above, the light unit makes up an assembly adapted for attachment to the vehicle. The assembly comprises a translucent body attached to the assembly, at least one input section for receiving light from a first light source generally parallel to the front surface and dispersing the light into the said translucent body, and attachment means for attaching the at least one input section to a side surface of said translucent body. Said translucent body is a wave guide arranged to direct light from the first light source through said translucent body so as to provide illumination through the light emitting area; and which body comprises a shock absorbing elastic material. According to a preferred embodiment of the invention, said air separation edge extends along at least a portion of the shock absorbing translucent body. Consequently, said air separation edge is located between an upper longitudinal portion of the translucent body and a downward angled rear portion of said body. The invention also relates to a vehicle provided with a light unit as described above. The light unit is mounted on the vehicle and is provided with a translucent body comprising an elastic material as described above. The translucent body is arranged to absorb at least a portion of an impact force during a pendulum rear impact test, simulating a low-speed rear collision. An offset between a vertical plane through the rearmost portion of a bumper and a vertical plane through the rearmost surface of the rear light is selected so that the translucent body comprising said elastic material is impacted by a pendulum during a rear impact test. Said vertical plane are preferably located at right angles to the swinging direction of the pendulum, which is substantially parallel to the transverse direction of the vehicle. The low-speed rear impact test can be performed according to Federal regulations 49 CFR Part 581, or any other suitable regulatory test.

In prior art vehicles, the rearmost portion of the bumper would as a rule be arranged with a significant offset away from a rearmost surface of the rear light. This offset would have been selected sufficiently large to prevent any part of the rear light from being struck by the pendulum, in order to prevent damage to the light unit.

The use of an elastic shock absorbing translucent body for the above purpose allows the use of a light unit as an aerodynamic, drag reducing component while at the same time fulfilling the requirements for impact testing. An arrangement according to the invention can be placed above a rear bumper on the vehicle and can also extend around the rear corner thereof, while at the same time allowing for a significantly reduced offset relative to a vertical plane through a rearmost portion of the bumper. This will in turn reduce the design constraints on the location of such a light unit.

### DESCRIPTION OF THE DRAWINGS

The invention will now be described in detail with reference to the appended drawing figures. It is understood that the drawing figures are only illustrations and are not intended to define the scope of the invention, which is defined by the claims appended below. It is further understood that the drawing figures are not necessarily drawn to scale, and that, unless otherwise indicated, the drawing figures only show schematic illustrations of constructions and methods described herein.
- Figure 1: shows a schematic side view of a low speed impact test setup;
- Figure 2: shows a perspective rear view of a vehicle provided with a light unit according to the invention;
- Figure 3: shows a rear side view of a vehicle provided with a light unit as shown in Figure 2;
- Figure 4: shows a perspective rear view of a vehicle provided with a light unit as shown in Figure 2;
- Figure 5: shows a schematic exploded view of a light unit according to one embodiment of the invention; and
- Figure 6: shows a schematic cross-section of a component part in the form of a translucent body, as indicated in Figure 5.

### PREFERRED EMBODIMENTS

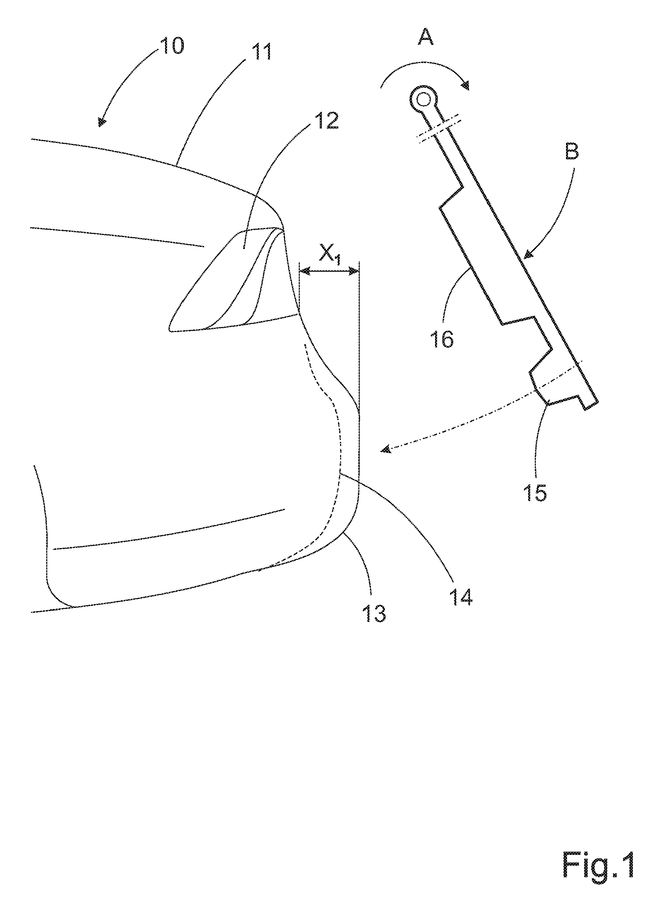

Figure 1 shows a schematic side view of a low speed impact test setup. The figure schematically indicates the setup for a standard test according to the United States the National Highway Traffic Safety Administration (NHTSA) Federal regulations 49 CFR Part 581. This standard prescribes performance requirements for passenger cars in low-speed front and rear collisions. This particular setup is used for testing the car body and safety related equipment at barrier impact speeds of 2,5 mph for a longitudinal rear pendulum impact. The standard requires that there be no damage to safety-related parts and exterior surfaces not involving the bumper system (e.g., sheet metal; lamps) with damage to the face bar and its fasteners at impact test speed of 2,5 mph rear impacts with a pendulum.

Figure 1 shows a vehicle 10 wherein the rear end 11 thereof is provided with a rear light 12. The lower part of the end of the vehicle 10 is provided with a bumper 13. During a test, a pendulum B provided with a first and second impact surface 15; 16 swings about an axis A to impact the bumper 13. The first impact surface 15 will strike the bumper 13 causing said bumper to deform, as indicated by a schematic dashed line 14. In order to prevent damage to certain safety related equipment, in particular rear lamps and indicators, the rearmost portion of the bumper 13 is arranged with an offset x₁ away from a rearmost surface of the rear light 12. This offset x₁ must be sufficient to prevent any part of the rear light 12 from being struck by the pendulum B, in particular by the second impact surface 16.

In a prior art vehicle 10 as indicated in Figure 1, the offset x₁ is often substantial and this solution will place design restrictions on the relative positioning and shape of the bumper in general and the rear light in particular.

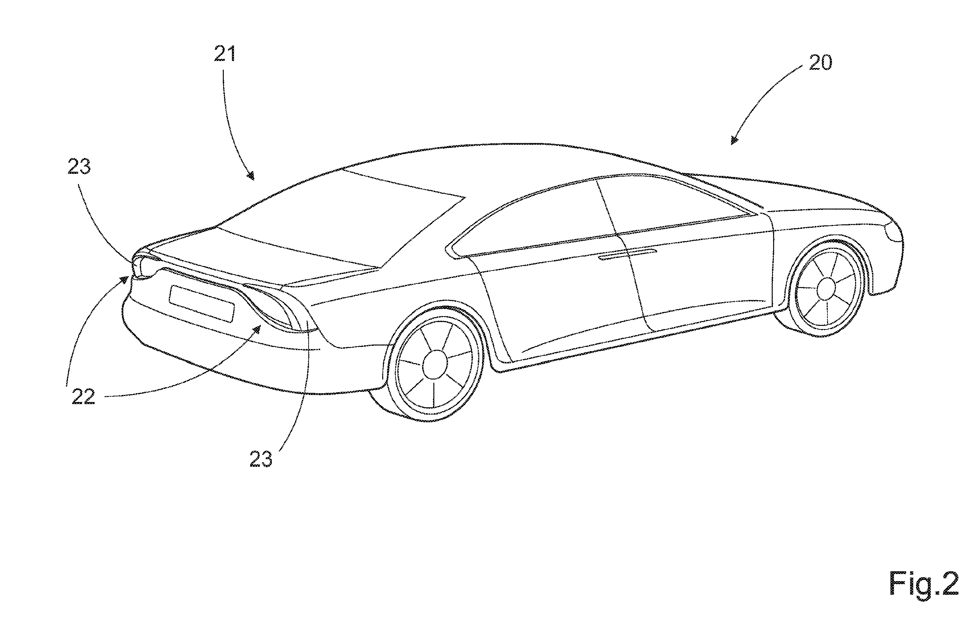

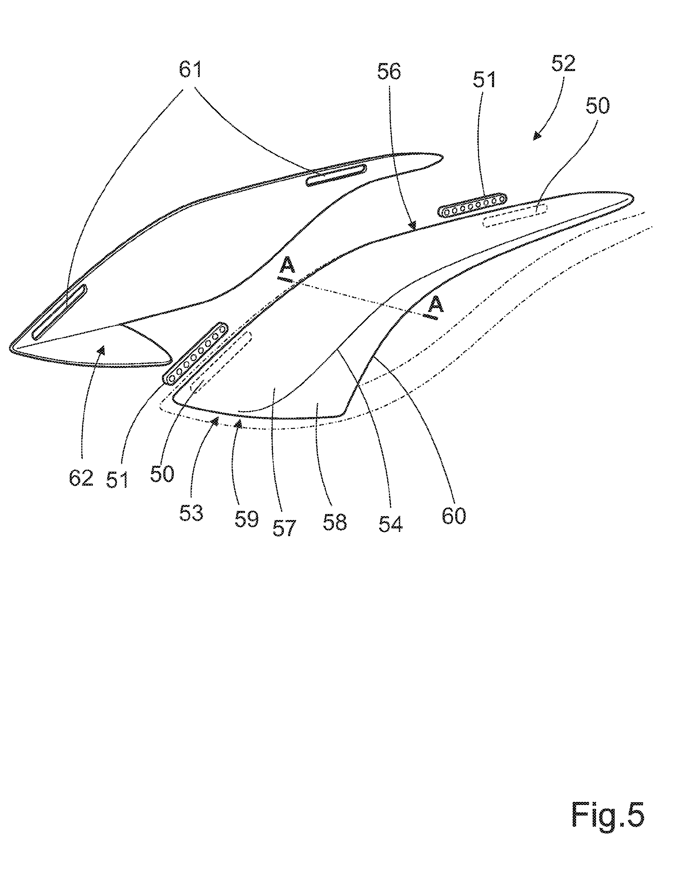

Figure 2 shows a perspective rear view of a vehicle 20, the rear end 21 of which is provided with a light unit 22 according to the invention. The light unit 22 makes up an assembly adapted for attachment to the vehicle 20, which assembly will be described in further detail below (see Fig.5). The light unit makes up an assembly adapted for attachment to the vehicle. The light unit comprises a translucent body attached to the assembly, said translucent body having an outer surface defining a light emitting area.

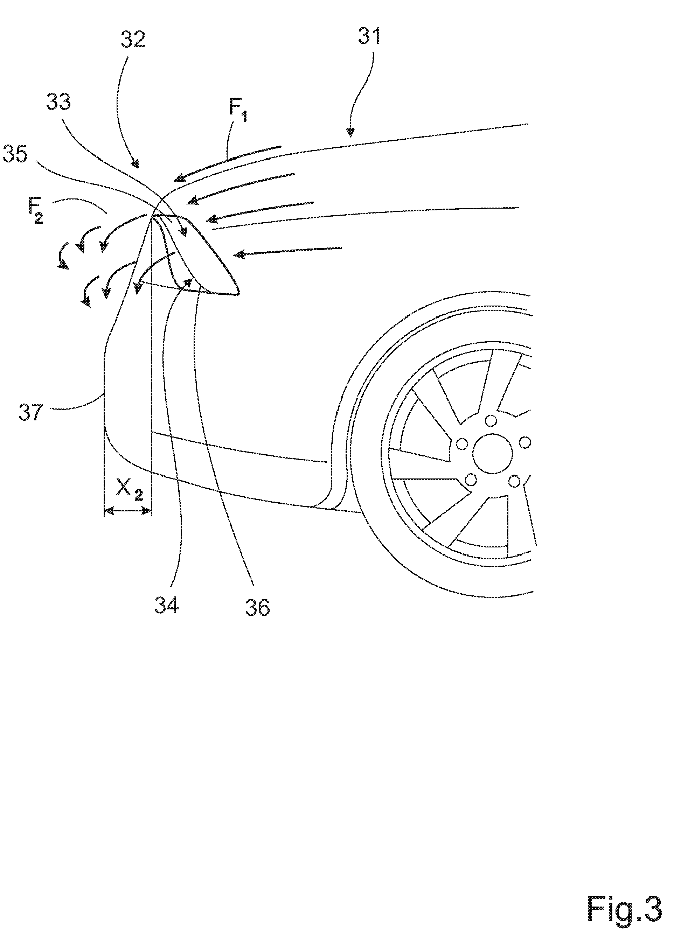

Figure 3 shows a rear side view of a vehicle 31 provided with a light unit 32 as shown in Figure 2. As indicated in Figure 2, the light unit 32 makes up an assembly (see Fig.5) adapted for attachment to the vehicle. The light unit 32 comprises a translucent body 33 attached to the assembly, said translucent body 33 having an outer surface defining a light emitting area. The translucent body 33 comprises a shock absorbing elastic material. This allows the offset x₂ between the rearmost portion of a bumper 37 and a rearmost surface of the rear light 32 to be reduced, as the elastic material prevents any part of the translucent body 33 from being damaged by a pendulum in a rear impact test (see Figure 1).

The translucent body 33 is provided with an air separation edge 34 extending along at least a portion of the rear light unit 32 in at least the transverse direction of the vehicle. As indicated in this example, the air separation edge 34 comprises a first portion 35 extending along the rear light unit 32 in said transverse direction and a second portion 36 extending at least partially around an adjacent corner of the body of the vehicle 31.

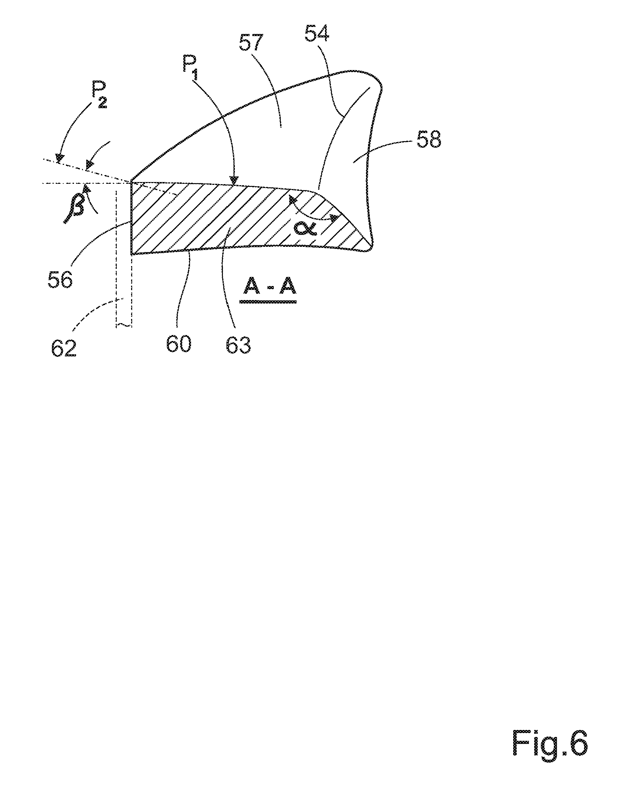

The air separation edge 34 is formed by an edge transition region of the rear light unit, following an upper and a side circumferential contour of said rear light unit 32. The air separation edge 34 is located between an upper portion of the rear light unit; said portion substantially conforming to the shape of the vehicle body adjacent said light unit 32, and a downward angled rear portion of the rear light unit. The angle between the upper portion of the rear light unit and the downward angled rear portion of the rear light unit can be selected between 90° and 160°. This angle (see Figure 6) can be constant or be varied along the entire extension of the air separation edge 34.

The air separation edge 34 according to the invention integrates said edge 34 into the rear light unit 32 and assists the air flow separation at the rear end of the vehicle body. A substantially laminar air flow F₁ over the vehicle body is broken up into small vortices F₂ so that the air flow leaves the rear of the vehicle body with reduced turbulence and drag. This arrangement decreases drag (c_{w}-coefficient), increases fuel economy, and helps keep the rear of the vehicle free from dirt.

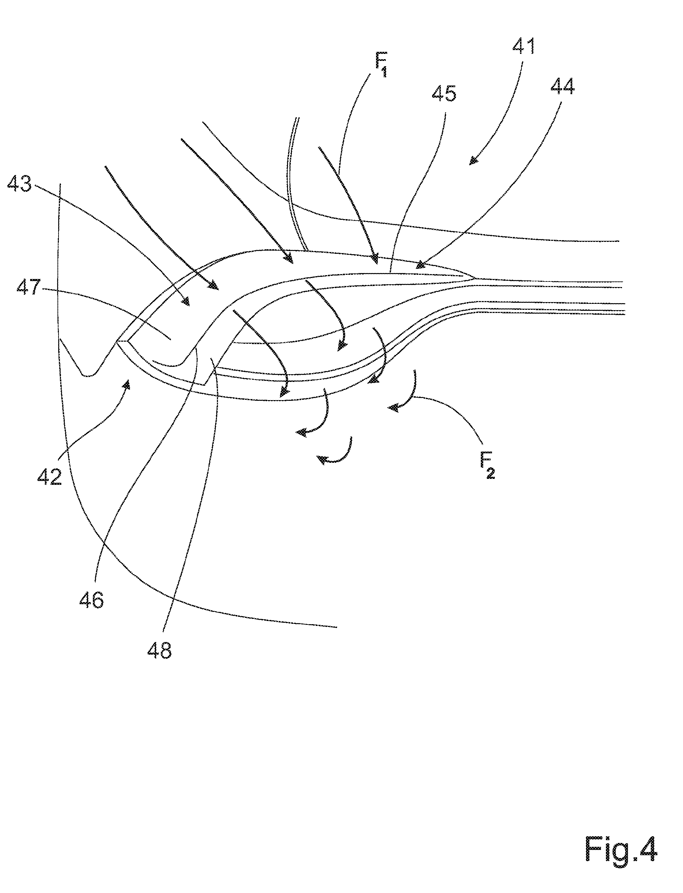

Figure 4 shows a perspective rear view of a vehicle provided with a light unit as shown in Figure 2. As indicated in Figure 4, the light unit 42 makes up an assembly (see Fig.5) adapted for attachment to the vehicle. The light unit 42 comprises a translucent body 43 attached to the assembly, said translucent body 43 having an outer surface defining a light emitting area. The translucent body 43 comprises a shock absorbing elastic material. An air separation edge 44 is formed by an edge transition region of the rear light unit, following an upper and a side circumferential contour of said rear light unit 42. As indicated in Figure 4, the air separation edge 44 comprises a first portion 45 extending along the rear light unit 42 in said transverse direction and a second portion 46 extending at least partially around an adjacent corner of the body of the vehicle 41.

The light emitting area can be divided into a substantially upper portion 47 of the rear light unit 42, which upper portion substantially conforms to the shape of the vehicle body adjacent said light unit, and a downward angled rear portion 48 of the rear light unit. As stated above, the angle between the upper portion of the rear light unit and the downward angled rear portion of the rear light unit can be selected between 90° and 160° (see Figure 6; "β"). A substantially laminar air flow F₁ over the vehicle body is broken up into small vortices F₂ so that the air flow leaves the rear of the vehicle body with reduced turbulence and drag.

Figure 5 shows a schematic exploded view of a light unit 52 according to one embodiment of the invention. The light unit 52 comprises a translucent body 53 attached to the assembly, said translucent body 53 having an outer surface 57, 58 defining a light emitting area, an inner surface 56 facing the vehicle, and side surfaces 59, 60 connecting the outer and inner surfaces. The assembly according to this embodiment further comprises two mounting sections 50 in the form of recesses in the translucent body 53 for light sources 51 arranged to transmit light into said translucent body. Attachment means is provided for attaching a support or housing 62 to a side surface 59 and a rear surface 56 of said translucent body 53. The housing 62 is provided with recesses 61 for providing access to the light sources 51. The light sources 51 are shown as holders comprising LEDs, which holders are substantially identical. However, the size of the holders and/or number of LEDs can be varied dependent on the design of the translucent body. The translucent body 53 forms a wave guide arranged to direct and disperse light from the light sources 51 into and through said translucent body so as to provide illumination through the light emitting area. The light emitting area comprises a substantially upper portion 57 of the rear light unit 52 and a downward angled rear portion 58 of the rear light unit. As stated above, the angle between the upper portion of the rear light unit and the downward angled rear portion of the rear light unit can be selected between 90° and 160° (see Figure 6; "β").The translucent body comprises a shock absorbing elastic material.

Figure 6 shows a schematic cross-section A-A of a component part in the form of a translucent body 63, as indicated in Figure 5. Figure 6 uses the reference numerals from Figure 5. The translucent body 63 is schematically shown with its rear surface 56 attached to the housing 62 (indicated in dashed lines).

The angle α between the upper portion 57 of the rear light unit and the downward angled rear portion 58 of the rear light unit can be selected between 90° and 160°. This angle α can be constant or be varied along the transverse extension of the air separation edge 54.

According to the invention, a plane P1 substantially parallel to the upper surface 57 of the light unit in a point located adjacent the air separation edge 54 is angled between 3° and 10° relative to a plane P2 substantially parallel to the upper surface of the vehicle body (indicated by a dash-dotted line) located upstream of this point, adjacent the location where the vehicle body transitions into the rear light unit. This angle is denoted β in Figure 6.

The invention can be varied freely within the scope of the appended claims. For example

## Claims

1. A light unit on an automotive vehicle, which light unit makes up an assembly adapted for attachment to the vehicle, **characterized in that** the assembly comprises
- a translucent body attached to the assembly, said translucent body having a outer surface defining a light emitting area, an inner surface facing the vehicle, and side surfaces connecting the outer and inner surfaces;
- at least one mounting section for a light source arranged to transmit light into said translucent body, and
- attachment means for attaching a support or housing to a side surface or a rear surface of said translucent body;
wherein said translucent body is a wave guide arranged to direct and disperse light from at least one light source through said translucent body so as to provide illumination through the light emitting area; and which body comprises a shock absorbing elastic material.

2. A light unit according to claim 1, **characterized in that** said light unit has an illumination mode in which at least a first light source provides illumination of a first intensity in a first wavelength range through the light emitting area; and a brake mode in which at least the first light source provides illumination of a second intensity in the first wavelength range through the light emitting area.

3. A light unit according to claims 1 or 2, **characterized in that** the assembly comprises a second light source attached to a side surface or a rear surface of said translucent body remote from the first light source and configured to provide illumination through at least a predetermined portion of the light emitting area.

4. A light unit according to claims 1-3, **characterized in that** said at least one light source is located on the vehicle at a location outside the assembly.

5. A light unit according to claim 4, **characterized in that** said at least one light source comprises at least one diode laser.

6. A light unit according to claims 1-3, **characterized in that** said at least one light source comprises at least one light emitting diode.

7. A light unit according to claim 6, **characterized in that** said at least one light source comprises multiple light emitting diodes mounted in or adjacent the side surface of said translucent body.

8. A light unit according to claim 1-7, **characterized in that** said translucent body has a light transmittance of 50 % or more.

9. A light unit according to claim 1-8, **characterized in that** said translucent body comprises an elastic material with a Shore A hardness of 50-90.

10. A light unit according to claim 9, **characterized in that** said translucent body comprises an elastic material comprises a latex rubber compound.

11. A light unit according to claim 9, **characterized in that** said translucent body comprises an elastic material comprises a styrene-butadiene-rubber.

12. A light unit according to any one of claims 1-11, **characterized in that** said translucent body comprises an elastic material is arranged to absorb at least a portion of an impact force during a pendulum rear impact test.

13. A light unit according to any one of claims 1-12, **characterized in that** an air separation edge is arranged to extend along at least a portion of the light unit in at least the transverse direction of the vehicle.

14. A light unit according to claim 13, **characterized in that** the air separation edge is arranged to follow an upper circumferential contour of said light unit.

15. A light unit according to claim 13 or 14, **characterized in that** said air separation edge is located between an upper portion of the light unit and a downward angled rear portion of the rear light unit.

16. A light unit according to claims 13-15, **characterized in that** a plane parallel to the upper surface of the light unit in a point located adjacent the air separation edge is angled between 3° and 10° relative to a plane parallel to the upper surface of the vehicle body located upstream of said point adjacent the location where the vehicle body transitions into the rear light unit.

17. Vehicle provided with a light unit according to any one of the above claims 1-16.

18. Vehicle according to claim 17, **characterized in that** the light unit is provided with a translucent body comprising an elastic material arranged to absorb at least a portion of an impact force during a pendulum rear impact test.

19. Vehicle according to claim 18, **characterized in that** an offset (x₂) between a vertical plane through the rearmost portion of a bumper and a vertical plane through the rearmost surface of the rear light is selected so that the translucent body comprising said elastic material is impacted by a pendulum during a rear impact test.
